# EUROPEAN PATENT SPECIFICATION

(11) **EP 2 988 397 B1**
(45) Date of publication and mention of the grant of the patent: **06.11.2019**
(21) Application number: 15181761.6
(22) Date of filing: 20.08.2015
(51) Int. Cl.: H02K 5/04, H02K 1/18, H02K 5/06, H02K 5/00, H02K 5/22

(54) **SHELL FOR A ROTATING ELECTRICAL MACHINE**
SCHALE FÜR EINE ROTIERENDE ELEKTRISCHE MASCHINE
ENVELOPPE POUR UNE MACHINE ÉLECTRIQUE TOURNANTE

(30) Priority: 22.08.2014 US 201462040666 P
(43) Date of publication of application: 24.02.2016
(73) Proprietor: Weg Equipamentos Elétricos S.A., 89256-900 Jaraguá do Sul, SC (BR)
(72) Inventor: CEZARIO, Cassiano Antunes, Jaraguá do Sul, Santa Catarina (BR)
(74) Representative: Plasseraud IP

(56) References cited:
- EP-A1- 2 698 564
- CN-A- 103 580 356
- DE-A1-102008 001 093
- FR-A1- 2 978 630
- JP-A- H1 118 351
- US-A- 4 134 036
- US-A- 4 841 183
- US-A1- 2003 107 279
- US-A1- 2006 070 228
- US-A1- 2014 145 548

## Description

### FIELD OF INVENTION

The present invention refers to a shell for a rotating electrical machine, wherein the constructive features of this shell allow a substantial reduction in the number of components, achieving production optimization, cost reduction, modularity and versatility.

### BACKGROUND OF THE INVENTION

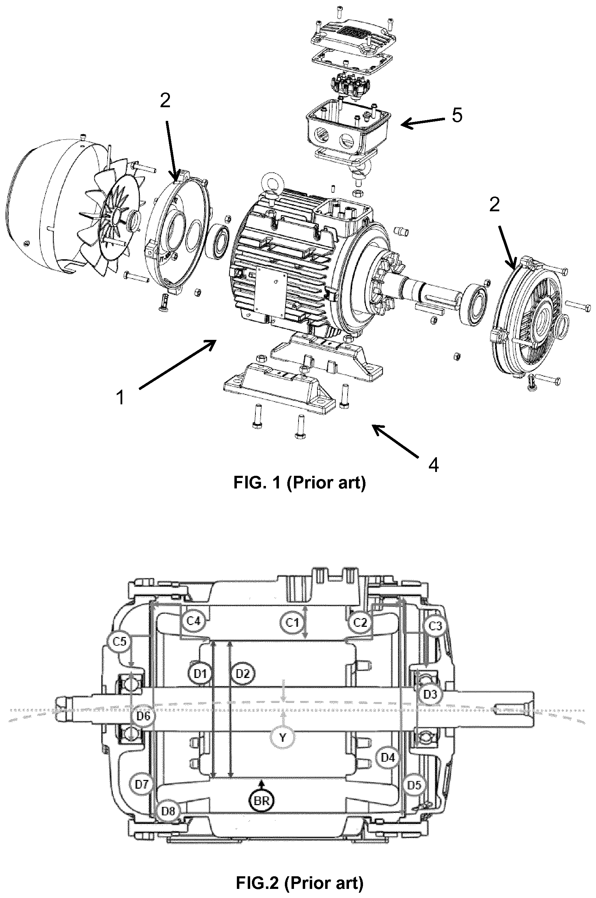

Figure 1 illustrates a conventional electrical motor. As can be seen in the figure, the conventional electrical motor usually comprises a frame, a terminal box, eyelets, front cover, rear cover, ventilation system, a shaft, bearings, a rotor, a stator and various fastening elements. In total, an electrical motor is usually comprised of about 70 different components, ranging to more or fewer components.

The great quantity of different components usually generates about 15 dimensional / geometric interfaces, which must be regarded and taken into account for the sum of tolerances. Figure 2 depicts such interfaces in a simplified way, wherein: C1 + C2 + C3 + C4 + C5 + D1 + D2 + D3 + D4 + D5 + D6 + D7 + D8 + BR impacts directly on the gap between the rotor and the stator, represented by Y, which, in turn, results from the combination of all of these tolerances. Controlling this gap between the rotor and the stator impacts directly on dynamic performance, which is verified through noise and vibration levels. The criticality of the dynamic performance increases as the power and dimensions of the rotating electrical machine increases.

The difficulties in ensuring the gap between the rotor and the stator become larger and more susceptible to dimensional / geometric interfaces as the size and power of the rotating electrical machine increase. This is basically due to the fact that the gap between the stator and rotor and the distance between bearings do not grow in proportion to the increase in the outer diameter of the stator. In addition, the rigidity of the structure of the rotating electrical machine components is higher in a small machine, and the magnetic forces are smaller.

Therefore, in low-power electrical machines, usually adopted in residential applications, controlling the gap between stator and rotor is not an item as critical as it is for electrical machines used in industrial applications.

Thus, the high number of components and the requirements of a specific tolerance range for proper operation mean that great care is needed in the quality control of components, also considering that each component may have several dimensional / geometric interfaces. This need for control ultimately results in increased cost and time impact on the operational chain.

Furthermore, to ensure the dimensional / geometrical interfaces, a number of intermediate operations are required, usually related to removal of material, resulting in intermediate stocks, which encumber the final product cost without adding value.

One of the main drawbacks of conventional rotating electrical machines is the shell. In known electrical machines, the shell is formed by a central tubular member 1 with walls, which may include heat exchange fins, and which acts as a radial enclosure, and two closing plates 2 at the ends of the central element, the two plates acting as an axial enclosure.

Therefore, in conventional electrical machines, the shell has at least three components that must be joined together efficiently, ensuring the correct operation of the assembly. Generally, this union is performed by means of fastening elements.

The base of the shell, known as the multi-mounting concept, is usually formed by two feet 4, attached to the central tubular member 1 by four screws. This prior art solution prevents the assembly process of these components from being done quickly, since it requires screwing the two feet 4 to the tubular body.

Another drawback of traditional rotating electrical machines is related to the assembly of the terminal box. The terminal boxes known from the state of the art are attached to the shell through multiple fastening elements, which increases the assembly time and hence the costs.

Therefore, there is in the art a need for a shell construction having a simple configuration, both in its manufacturing and in the assembly process of the components of the rotating electrical machine. Additionally, it is desired a shell that minimizes or eliminates intermediate stock.

US document no. US 20140167559 describes an electrical machine with a simplified shell construction, which comprises a first shell part and a second shell part, wherein the stator is coupled to the first and second shell parts by a compression force. To achieve this simplified construction, the first and second shell parts are engaged to one another in a sliding configuration and then are attached together by screws. The compression force - responsible for fastening the stator - is applied to the stator laminations.

Therefore, although this document discloses a simplified solution for an electrical machine shell, it is necessary that the shell parts are engaged in sliding configuration, so that a compression force is applied on the stator.

Document US 6,707,197 reveals an electrical machine shell comprising two cover shell parts and a fastening system for the parts. The first shell part has a ledge with a threaded bore for coupling to the other shell part and three fastening parts positioned equidistantly on the outer periphery of the first part. The fastening parts have through holes for receiving screws. The second shell part comprises a ledge corresponding to the ledge of the first shell part.

In the solution of document US 6,707,197 , each of the first and second shell parts has a stop portion formed at an inner wall thereof. Therefore, for assembling the machine, the stop portions of the shell parts are fitted to the ends of the stator, and subsequently the shell parts are fastened together at the junction of the ledges.

Thus, the construction proposed in document US 6,707,197 also requires that the shell parts are configured for cooperation with the ends of the stator.

US document US 2009/0033163 shows a motor shell with small dimension, consisting of two cylindrical parts with end shields. The open end of each cylindrical part has a mounting surface and the two cylindrical parts are connected together by means of the mounting surfaces.

US document US 2003/107279 shows a motor housing including two cover shells each having a hollow cover body and mounts mounted on the outer periphery thereof. The two cover shells are connected with two ends of a stator of the motor by the ends of the mounts of the two cover shells are contacted to each other in pairs and are fastened with each other by screws.

US document US 2014/145548 shows a motor, wherein a material of the stator core is different from a material of the housings, the first housing and the second housing are connected each other; and the first housing and the second housing face each other in a state where a gap intervenes between both housings.

EP document EP 2 698 564 shows a motive power transmission device capable of suppressing deformation of matching surfaces of cases.

Although some state of the art solutions show shells with a simplified constructions, the need remains in the art for a shell solution that enables a more versatile and simple solution, and which allows the simple and easy assembly of internal and external components, with less dimensional / geometrical interfaces.

Especially, the need remains in the art for a solution that can be applied in high power machines such as industrial machines.

Accordingly, it should be noted the solutions shown in the prior art documents refer to low-power machines, usually adopted for residential applications, such as washing machines, pumps, electronic gates, air conditioning systems. In such solutions, it is common to find an axial stop, such the assembly of the stator is done with reference to that axial stop, by means of a partial contact in the radial direction of the inner surface of the shell with the stator. These known solutions are generally adopted to specific constructions, with power and dimensions limited to a single configuration. Although they offer an alternative to the conventional rotating electrical machine shells, there are limitations.

### OBJECTS OF THE INVENTION

In view of the aforementioned drawbacks and others well known to those skilled in the art, the present invention provides a new shell for a rotating electrical machine that eliminates the drawbacks of the conventional shells.

Therefore, a first aspect of the present invention is to provide a new shell comprising a bipartite shell, wherein the first shell part combines the function of housing and front cover, and the second shell part combines the function of housing and rear cover. The shell parts are formed in a single piece, already including the necessary interfaces for assembling the external components of the machine. Additionally, the reduction of the geometrical / dimensional interfaces due to the aggregation of features allows for a redistribution of the tolerance zones, which in some situations may allow eliminating the machining of the interfaces and make feasible the application of this technique in rotating electrical machines with high power and great dimensions, including those used in industrial applications. Moreover, the proposed construction enables the widespread adoption of this solution, since it does not rely on the presence of axial stops which limit the size of the stator and the power variation impacted by such size. Another difference is the full contact between the stator and the shell.

The solution proposed by the present invention provides reduction of components, modularity and, by eliminating intermediate stocks, supply chain optimization. The proposed solution also achieves cost reduction, as it allows combining component functions in a smaller number of components, and, in some cases, eliminates machining operations.

Furthermore, the present invention provides a new system for fastening components to the shell, guaranteeing more versatility, ease of fastening and high strength, without having a high impact on the assembly and manufacturing process of the rotating electrical machine.

### SUMMARY OF THE INVENTION

The present invention provides a shell for a rotating electrical machine, the shell comprising a first shell part and a second shell part configured for coupling.

The coupling of the first and second shell parts forms a cavity that receives at least a shaft, a rotor and a stator.

The first shell part is formed in a single piece, the second shell part is formed in a single piece; and the cavity is configured to receive the stator in radial contact with an inner surface of the shell.

The first and second shell parts are free of elements liming the displacement of the stator in the axial direction.

In the preferred embodiment of the invention, the displacement limitation of the stator in the radial and axial directions is performed by the pressure generated by the radial pressure. In specific embodiments that require the displacement limitation to be better guaranteed, the displacement limitation is performed by an elastic pin which passes through the cylindrical wall of the first shell part and contacts the stator.

It should be noted, however, that the displacement limitation of the stator in the radial and axial directions may be performed by the radial pressure resulting from the interference of the cylindrical wall sections of the first and second shell parts in contact with the stator, by an adhesive element between the cylindrical wall of the first shell part and the stator, or by an adhesive element between the cylindrical wall of the second shell part and the stator.

The first shell part is formed in a single piece, with a cylindrical wall section, responsible for part of the radial enclosure, and an end section, responsible for part of the axial enclosure. The cylindrical wall section comprises: at least one terminal box receiving portion, at least two connection element receiving portions for receiving elements intended to connect the machine to a base, and at least two coupling elements. The end section includes a shaft passage hole and a flange reception flange.

The second shell part is formed in a single piece, with a cylindrical wall section, responsible for part of the radial enclosure, and an end section, responsible for part of the axial enclosure. The cylindrical wall section comprises at least two connection element receiving portions for receiving elements intended to connect the machine to a base, at least two coupling elements, and four snap fit elements for connecting a baffle cover. The end section includes a shaft passage central role and a portion for receiving an additional element, such as a brake.

Each of the coupling elements of the first shell part comprises a tubular element with an internal channel for receiving a fastening element. The internal channel is threaded. Each of the coupling elements of the second shell part comprises a housing for receiving a fastening element. The coupling elements of the first and second shell parts are configured to coincide when the shell parts are coupled, so that the respective fastening element can be inserted through the housing and through the internal channel of the tubular element.

In the preferred embodiment of the invention, the first shell part comprises for connection element receiving portions for receiving elements intended to connect the machine to a base and four coupling elements, and the second shell part comprises four coupling elements.

Still in the preferred embodiment, each connection element receiving portion is a rail configured to receive, in axial engagement, a longitudinal ledge of a connecting element. The rail may comprise a first longitudinal wall and a second longitudinal wall, and, preferably, the second longitudinal wall is formed in the tubular element. Attachment of the connecting element is performed with a single fastening element.

Also in the preferred embodiment, the terminal box reception portion comprises a perimetric wall and a fastening element reception portion.

The end section of the first shell part may comprise a flange reception portion, and the cylindrical section of the second shell part may comprise a flat surface portion for receiving an identification plate, and fin portions covering part of the surface area.

### BRIEF DESCRIPTION OF THE DRAWINGS

The present invention will be described in more detail below, with references to the accompanying drawings, in which:
Figure 1 - is an exploded perspective view of a rotating electrical machine known from the state of the art;
Figure 2 - is a schematic view showing the dimensional / geometrical interfaces of the components of the rotating electrical machine known from the state of the art;
Figure 3 - is a perspective view of a rotating electrical machine incorporating the shell according to a preferred embodiment of the present invention, showing the shell parts in a spaced configuration;
Figure 4 - is a perspective view of a rotating electrical machine incorporating the shell according to a preferred embodiment of the present invention, showing the shell parts in a coupled configuration;
Figure 5 - is a cross sectional view of the shell according to the preferred embodiment of the present invention, without the internal components of the rotating electrical machine;
Figure 6 - is a cross sectional perspective view of the shell according to the preferred embodiment of the present invention, showing the internal components of the rotating electrical machine;
Figure 7 - is an exploded perspective view of a rotating electrical machine incorporating the shell according to a preferred embodiment of the present invention;
Figure 8 - is a schematic view showing the dimensional / geometrical interfaces of the components of the rotating electrical machine incorporating the shell according to an embodiment of the present invention;
Figure 9 - is a detailed view of the connection element receiving portion of the shell according to an embodiment of the invention;
Figure 10 - is a detailed view of the terminal box receiving portion of the shell according to an embodiment of the invention;
Figure 11 - is a frontal view of the rotating electrical machine incorporating the shell according to an embodiment of the invention;
Figure 12 - is a perspective view of a rotating electrical machine incorporating the shell according to an embodiment of the present invention, with a flange shown in exploded configuration.

### DETAILED DESCRIPTION OF THE INVENTION

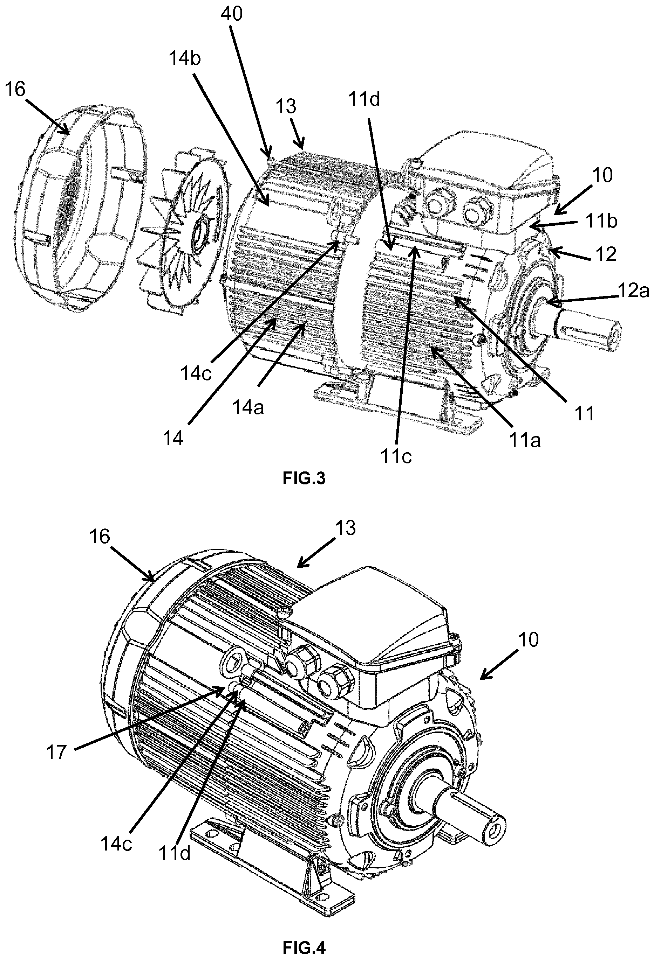

Figures 3 to 12 show a simplified construction rotating electrical machine according to a preferred embodiment of the present invention.

In the figures shown, the rotating electrical machine is an electric motor, however, it should be understood that the inventive concept of the present invention could be applied to any rotating electrical machine.

The solution proposed by the present invention is based on a simplified concept of shell construction, which allows optimized assembly of internal and external components with the flexibility to vary the stator length within a variation range and with the possibility to avoid material removal operations, such as machining, to ensure dimensional / geometrical interfaces.

The shell according to the present invention has a first shell part and a second shell part. Thus, figures 3 and 4 show the electric motor according to a preferred embodiment of the invention. Figure 3 shows the shell parts in a spaced configuration and Figure 4 shows the shell parts in coupled configuration.

The first shell part 10 is formed in a single piece 10, and has a cylindrical wall section 11 and an end section 12. The second shell part 13 has a cylindrical wall section 14 and an end section 15.

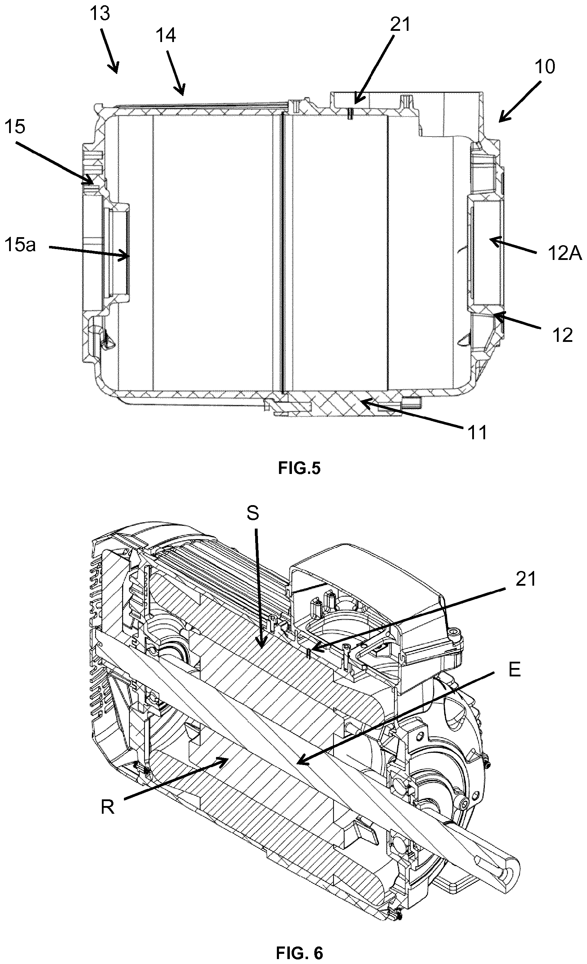

As best illustrated in Figures 5 and 6 , the coupling of the first and second shell parts 10, 13 forms a cavity which houses the components of the electrical machine, such as the stator S, rotor R and shaft E.

Unlike the shells known from the state of the art, the internal surface of the shell is free of shoulders or projections formed directly on the surface and intended to limit the displacement of the stator S in the axial direction. Therefore, there is flexibility to vary the stator length within an acceptable range of variation, and the contact in the radial direction is not restricted to a portion of the stator S.

Indeed, as it is clear in figure 6 , the stator makes radial contact with the shell after the assembly process of the rotating electric machine, but does not interact with any stop, channel or shoulder on the internal surface of the casing in the direction axial. Thus, the inner surface of the shell parts is free of elements interacting with the stator in the axial direction.

In the preferred embodiment of the present invention, the limitation of stator displacement in the axial direction is performed by the contact pressure originating from the interface between the stator S and the shell 10, 13, and, more specifically, between the stator S and the cylindrical wall sections 11 and 14. In specific cases, which require greater assurance of this limitation, an elastic pin 21 can be added (see figures 5 and 6). This elastic pin 21 passes through the cylindrical wall section 11 of the first shell part 13 and contacts the stator S.

It should be noted, however, that in alternative embodiments of the present invention, the limitation of stator displacement in the radial and axial directions can be performed by an adhesive element between the cylindrical wall 11 of the first shell part 10 and the stator S, and / or by an adhesive element between the cylindrical wall 14 of the second shell part 10 and the stator S.

The cylindrical wall section 11 of the first shell part 10 comprises an external surface with heat exchange fins 11 a covering part of the surface area, at least one terminal box receiving portion 11b, and at least two connection element receiving portions 11c arranged on the contour of the cylindrical wall.

The first shell part 10 further comprises at least two coupling elements 11 d for engagement with the second shell part.

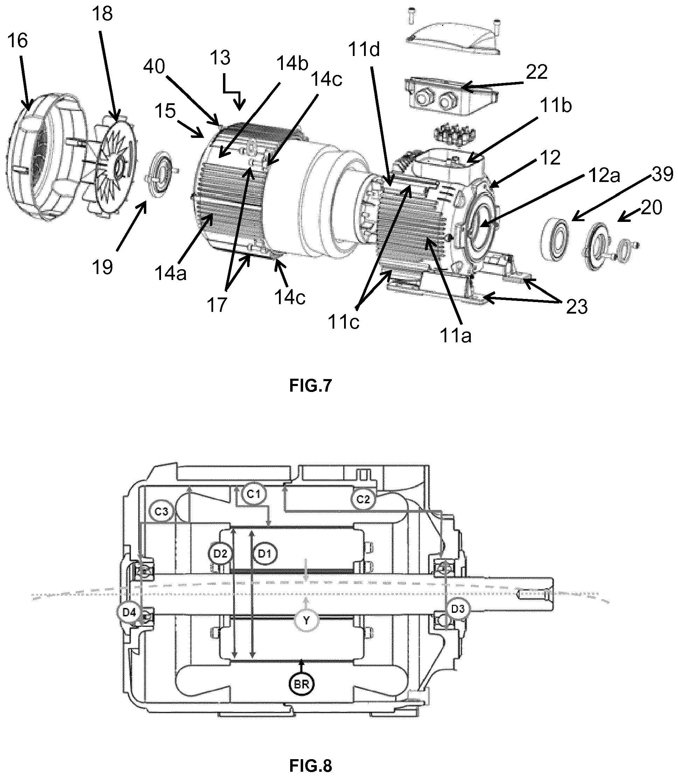

In the preferred embodiment of the present invention, the first shell part 10 comprises four connecting element receiving portions 11c, with the receiving portions 11c arranged in an equidistant manner along the cylindrical wall section. Thus, a first of these portions 11 c is arranged near the top of the shell and a second of these portions 11 c is arranged closer to the base of the shell (see figure 7).

Still in the preferred embodiment of the present invention, the first shell part 10 comprises four coupling elements 11 d, which are arranged near the receiving portions 11 c.

The end section 12 of the fist shell part 10 basically comprises a cover with a central hole 12a for passage of the motor shaft.

It should be noted that the first shell part 10 is formed in a single piece, preferably in a casting process, whether it be under pressure or gravity. Thus, cylindrical wall and end sections 11 and 12, the terminal box receiving portion 11 b, the connection element receiving portions 11c and coupling elements 11 d are all formed in a single piece (i.e., are all formed in a single process, preferably casting).

This feature of the invention allows for cost savings in comparison with conventional shells, as well as for faster and cheaper manufacturing process and for a simplified assembly process. Also eliminated is the need for intermediate stocks, since the reduction of dimensional interfaces allow a redistribution of the sum of the tolerance zones, also allowing the elimination of material removal processes such as machining, conventionally adopted in the internal part of the housing to ensure the dimensional / geometric interfaces.

The second shell part 13 has a cylindrical wall section 14 and an end section 15 (see Figure 5 , where the wall is hidden in the view).

The cylindrical wall section 14 comprises an outer surface with heat exchange fins 14a covering part of the surface area and at least two coupling elements 14c.

In the preferred embodiment of the present invention, the second shell part 13 comprises four coupling elements 14c, which are arranged in a position coinciding with the coupling elements 11 d of the first shell part 10.

As can be understood by those skilled in the art, the end section 15 comprises a central hole 15a for passage of the motor shaft.

It should be noted that the second shell part 13 is formed in a single piece, preferably in a process of casting under pressure or gravity. Thus, the cylindrical wall and end sections 14, 15 and the coupling elements 14c are all configured in a single piece shell part.

As shown in the figures, in the preferred embodiment of the present invention, the cylindrical wall portion 14 further comprises a flat surface portion 14b for receiving an identification plate. This surface is present over four regions of the cylindrical surface 14.

Preferably, a baffle cover 16 is fitted on the second shell part 13. The baffle cover is attached to the second shell part 13 through four locking elements 40 of the snap fit type.

Figure 4 shows the shell parts 10, 13 in coupled configuration. As can be seen in this figure, when coupled, the coupling elements 11 d of the first shell part 10 and the coupling elements 14c of the second shell part 13 are in a coincident / corresponding position.

Each coupling element 11 d of the first shell part 10 comprises a tubular element with a threaded inner channel and each coupling element 14c of the second shell part 13 comprises a housing with a through central hole.

Thus, when the shell parts 10, 13 are coupled, a fastening element 17 can be inserted through the central through hole of the housing 14c and threaded into the threaded internal channel of the tubular member 11 d so as to join the shell parts 10, 13 in coupled configuration.

It should be noted, however, that in alternative embodiments of the present invention, the connection between the first shell part 10 and the second shell part 13 can be made by an adhesive element, without the need for additional coupling elements.

Figure 7 shows a schematic exploded representation of the electric machine according to the present invention.

In this figure we can see the first shell part 10 with its elements configured in a single piece (cylindrical and end sections 11, 12, heat transfer fins 11 a, terminal box receiving portion 11 b, connection element receiving portions 11c and coupling elements 11 d), and the second shell part 13 with its components formed in a single piece (cylindrical and end sections 14, 15, fins 14a, flat surface portion 14b and coupling elements 14c).

Figure 7 further shows fastening elements 17, which are used for coupling the housing parts 10, 13, and the fitting of the baffle cover 16.

In an embodiment of the present invention, the fastening elements are screws.

The figure also shows a fan 18, a set of bearing retaining rings 19 and 20, a terminal box 22 and feet 23 for connecting the machine to a base. The operation of these components in the context of an electric motor is well known to those skilled in the art, and therefore such elements will only be described to the extent necessary for the understanding of the features of the invention.

As best viewed in the schematic representation of Figure 7 , the electric motor solution of the present invention has an amount of about 38 components. This reduction is a consequence of condensing the component functions. The reduced number of components reduces the number of dimensional / geometrical interfaces to 9 (Figure 8), with a simplified sum of tolerances being illustrated as: C1 + C2 + D1 + D2 + D3 + D4 + BR = Y, where Y is the gap between the rotor and stator. Thus, considering the dimensional interface requirement, the present invention achieves a reduction of approximately 40% when compared to conventional electric motors. This enables working with higher tolerance zones in the remaining interfaces, allowing the elimination of manual or mechanized material removal operations.

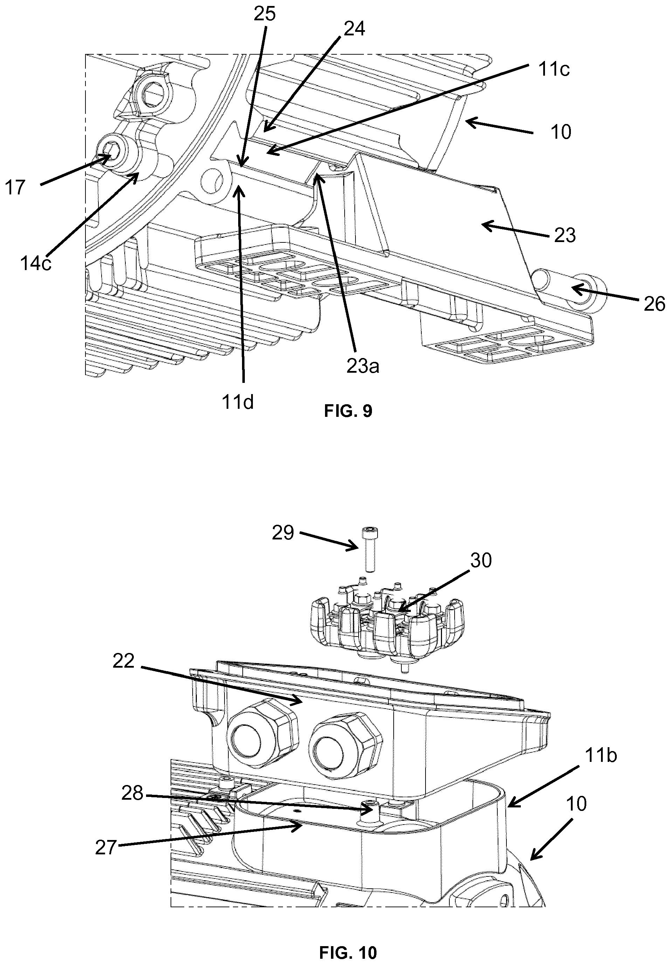

Figure 9 shows in greater detail the connection element receiving portion 11c, which receives the element that connects the machine to the machine base, the coupling element 11 d of the first shell part 10, the coupling element 14c of the second shell part 13 and fastening member 17.

In this figure, the connecting element 23 which is fixed to the receiving portion 11 c is a foot 23.

In the preferred embodiment of the present invention, the connecting element receiving portion 11c is a rail 11c configured to receive, in axial engagement, a longitudinal ledge 23a of the connection member 23.

The rail 11c is formed by a first longitudinal wall 24 and a second longitudinal wall 25. In the preferred embodiment, the second longitudinal wall 25 is the wall of the coupling element 11 d.

As previously mentioned, the coupling element 11 d is preferably a tubular element with a threaded internal channel that receives a fastening member 17.

In this sense, the second shell part 13 has a housing 14c for receiving the fastening member element 17.

In this preferred embodiment of the invention, the fastening element 17 adopted is a hexagon socket screw.

As figure 9 shows, the tubular element 11 d receives the screw 17 in a first end, but also receives, on its other end, a screw 26 whose purpose is to limit the axial translation between the foot 23 and the rail 11c.

As mentioned earlier, the wall 24 and tubular element 11 d that form the rail and the reception channel of the screws 17 and 26 are integrally formed in the first shell part 10, in a single-piece configuration. Thus, the assembly process of the foot 23 is carried out in a simple manner, by an axial engagement system and a single fastening element.

Although the figures show a connecting element shaped as a foot 23, it should be understood that the connecting element 23 may have another configuration, such as a connector of the pad mount type or even a connection element to facilitate coupling on a machine. To achieve that, the connecting element 23 must only be provided with a longitudinal ledge configured to fit the rail 11c (i.e., to fit the connection element receiving portion 11c).

Figure 10 shows in greater detail the terminal box reception portion 11 b of the first shell part 10.

As can be seen in this figure, in the preferred embodiment of the present invention, the terminal box receiving portion 11 b comprises a perimetric wall 27 and a tubular projection 28 for receiving a fastening element.

Preferably, the perimeter wall 27 is configured to fit into a recesses present at the bottom of the terminal box 22, and receiving tubular projection 28 is configured to receive a fastening member 29 for fixing the box. As shown in the figure, the fastening element 29 can be used to further attach a terminal board 30 to the terminal box.

Thus, for fastening the lower part of the terminal box 22, the same is inserted into the perimetric wall 27 and the fastening element 29 passes through the terminal board 30 and through the box 22 and is received in the projection 28.

In this preferred embodiment of the invention, the fastening element 28 is a screw.

Thus, the terminal box receiving portion 11 b formed in the first shell part 10 allows the fast and simple attachment of the terminal box. This aspect of the invention simplifies the assembly process and reduces the number of components, assembly time, and, consequently, the cost of the machine.

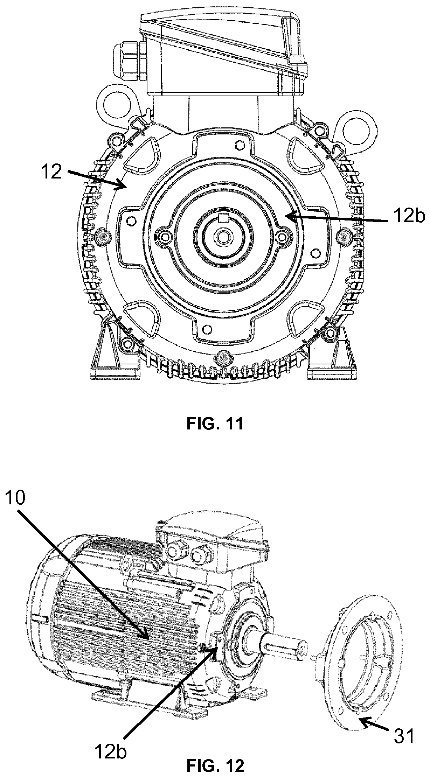

Figure 11 shows a front view of the electrical machine in accordance with an embodiment of the present invention.

As can be seen in this figure, in this embodiment, the end section 12 of the first shell part 10 further comprises a flange receiving portion 12b, also formed in a single piece.

As shown in Figure 12 , the flange receiving portion 12b is configured to receive a flange 31, which allows coupling the motor to other equipment.

The shell solution of the present invention confers a modular character to the electrical machine and has no dependence on the type of material (e.g., iron, steel, aluminum, polymeric material) nor on the manufacturing process (e.g., casting, molding, injection, deposition, sintering).

Having described examples of embodiments of the present invention, it should be understood that the scope of the present invention encompasses other possible variations of the inventive concept described, being limited solely by the wording of the appended claims.

## Claims

1. Shell for a rotating electrical machine, the shell comprising a first shell part (10) and a second shell part (13), wherein:
the first shell part (10) and the second shell part (13) are coupled to form a cavity which receives at least a shaft (E), a rotor (R) and stator (S);
the first shell part (10) is formed in a single piece, the first shell part (10) having a cylindrical wall section (11) and an end section (12) with a shaft passage hole (12a);
the second shell part (13) is formed in a single piece, the second shell part (13) having a cylindrical wall section (14) an end section (15) with a shaft passage hole (15a);
the cavity is configured to receive the stator (S) in radial contact with an inner surface of the shell;
the internal surfaces of the first and second shell parts (10, 13) are free of elements limiting the displacement of the stator in the axial direction;
the cylindrical wall section (11) of the first shell part (10) comprises, all formed in a single piece, at least one terminal box receiving portion (11 b), at least two connection elements receiving portions (11c) and at least two tubular elements (11 d) integrally formed in the first shell part (10), each tubular element (11d) having an internal threaded channel for receiving a fastening element (17);
the cylindrical wall section (14) of second shell part (13) comprises, formed in a single piece, at least two coupling elements (14c), each coupling element having a through central hole for receiving a fastening element (17); and
the tubular elements (11d) and the coupling elements (14c) are configured to coincide when the shell parts are coupled, so that each respective fastening element (17) can be inserted through the through central hole of each respective coupling element (14c) and threaded to the internal channel of each respective tubular element (11 d).

2. Shell, according to claim 1, **characterized in that** the displacement limitation of the stator in the radial and axial directions is performed by the radial pressure resulting from the interference between the cylindrical wall sections (11,14) of the first and second shell parts (10, 13) and the stator (S).

3. Shell, according to claim 1, **characterized in that** the displacement limitation of the stator in the radial and axial directions is performed by an elastic pin (21) which passes through the cylindrical wall (11) of the first shell part (10) and contacts the stator (S).

4. Shell, according to claim 1, **characterized in that** the displacement limitation of the stator in the radial and axial directions is performed by one of an adhesive element between the cylindrical wall (11) of the first shell part (10) and the stator (S) and an adhesive element between the cylindrical wall (14) of the second shell part (13) and the stator (S).

5. Shell, according to any one of claims 1 to 4, **characterized in that** internal channel of the tubular element (11 d) is hexagonal for receiving a self-screwing fastening element (17).

6. Shell, according to any one of claims 1 to 5, **characterized in that** the first shell part (10) comprises four connection elements receiving portions (11c) and four tubular elements (11 d), and the second shell part (13) comprises four coupling elements (14c).

7. Shell, according to any one of claims 1 to 6, **characterized in that** the terminal box receiving portion (11 b) comprises a perimetric wall (27) and a fastening element receiving projection (28).

8. Shell, according to any one of claims 1 to 7, **characterized in that** the end section (12) of the first shell part (10) comprises a flange receiving portion (12b).

## Patentansprüche

1. Mantel für eine rotierende elektrische Maschine, wobei der Mantel ein erstes Mantelteil (10) und ein zweites Mantelteil (13) aufweist, wobei:
das erste Mantelteil (10) und das zweite Mantelteil (13) zum Bilden eines Hohlraums, der mindestens eine Welle (E), einen Rotor (R) und einen Stator (S) aufnimmt, miteinander gekoppelt sind;
das erste Mantelteil (10) in einem Stück gebildet ist, wobei das erste Mantelteil (10) einen zylindrischen Wandabschnitt (11) und einen Endabschnitt (12) mit einem Wellendurchgangsloch (12a) aufweist;
das zweite Mantelteil (13) aus einem Stück gebildet ist, wobei das zweite Mantelteil (13) einen zylindrischen Wandabschnitt (14) und einen Endabschnitt (15) mit einem Wellendurchgangsloch (15a) aufweist;
der Hohlraum zum Aufnehmen des Stators (S) in radialem Kontakt mit einer Innenfläche des Mantels ausgebildet ist;
die Innenflächen des ersten und des zweiten Mantelteils (10, 13) frei von Elementen sind, die eine Verlagerung des Stators in Achsrichtung begrenzen;
der zylindrische Wandabschnitt (11) des ersten Mantelteils (10) jeweils einstückig mindestens einen Anschlusskasten-Aufnahmeabschnitt (11b), mindestens zwei Verbindungselement-Aufhahmeabschnitte (11c) und mindestens zwei Rohrelemente (11d) aufweist, die integral in dem ersten Mantelteil (10) gebildet sind, wobei jedes Rohrelement (11d) einen Kanal mit Innengewinde zum Aufnehmen eines Befestigungselements (17) aufweist;
der zylindrische Wandabschnitt (14) des zweiten Mantelteils (13) mindestens zwei jeweils einstückig gebildete Kopplungselemente (14c) aufweist, wobei jedes Kopplungselement ein zentrales Durchgangsloch zum Aufnehmen eines Befestigungselements (17) aufweist; und
die Rohrelemente (11d) und die Kopplungselemente (14c) so ausgebildet sind, dass sie übereinstimmen, wenn die Mantelteile miteinander gekoppelt sind, so dass jedes jeweilige Befestigungselement (17) durch das zentrale Durchgangsloch des jeweiligen Kopplungselements (14c) eingeführt und in den Innenkanal des jeweiligen Rohrelements (11d) eingeschraubt werden kann.

2. Mantel nach Anspruch 1, **dadurch gekennzeichnet, dass** die Verlagerungsbegrenzung des Stators in radiale und in Achsrichtung durch den radialen Druck erfolgt, der sich aus der Wechselwirkung zwischen den zylindrischen Wandabschnitten (11, 14) des ersten und zweiten Mantelteils (10, 13) und dem Stator (S) ergibt.

3. Mantel nach Anspruch 1, **dadurch gekennzeichnet, dass** die Verlagerungsbegrenzung des Stators in radialer und in Achsrichtung durch einen elastischen Stift (21) erfolgt, der durch die zylindrische Wand (11) des ersten Mantelteils (10) verläuft und den Stator (S) berührt.

4. Mantel nach Anspruch 1, **dadurch gekennzeichnet, dass** die Verlagerungsbegrenzung des Stators in radialer und in Achsrichtung entweder durch ein Haftelement zwischen der zylindrischen Wand (11) des ersten Mantelteils (10) und dem Stator (S) oder einem Haftelement zwischen der zylindrischen Wand (14) des zweiten Mantelteils (13) und dem Stator (S) erfolgt.

5. Mantel nach einem der Ansprüche 1 bis 4, **dadurch gekennzeichnet, dass** der Innenkanal des Rohrelements (11d) hexagonal ist, um ein selbstschraubendes Befestigungselement (17) aufzunehmen.

6. Mantel nach einem der Ansprüche 1 bis 5, **dadurch gekennzeichnet, dass** das erste Mantelteil (10) vier Verbindungselement-Aufnahmeabschnitte (11c) und vier Rohrelemente (11d) und das zweite Mantelteil (13) vier Kopplungselemente (14c) aufweist.

7. Mantel nach einem der Ansprüche 1 bis 6, **dadurch gekennzeichnet, dass** der Anschlusskasten-Aufnahmeabschnitt (11b) eine Umfangswand (27) und einen Vorsprung (28) aufweist, der ein Befestigungselement aufnimmt.

8. Mantel nach einem der Ansprüche 1 bis 7, **dadurch gekennzeichnet, dass** der Endabschnitt (12) des ersten Mantelteils (10) einen Flanschaufnahmeabschnitt (12b) aufweist.

## Revendications

1. Enveloppe pour une machine électrique tournante, l'enveloppe comprenant une première partie d'enveloppe (10) et une seconde partie d'enveloppe (13), dans laquelle :
la première partie d'enveloppe (10) et la seconde partie d'enveloppe (13) sont accouplées pour former une cavité qui reçoit au moins un arbre (E), un rotor (R) et un stator (S) ;
la première partie d'enveloppe (10) est formée d'une seule pièce, la première partie d'enveloppe (10) présentant une section de paroi cylindrique (11) et une section d'extrémité (12) avec un trou de passage d'arbre (12a) ;
la seconde partie d'enveloppe (13) est formée d'une seule pièce, la seconde partie d'enveloppe (13) présentant une section de paroi cylindrique (14) et une section d'extrémité (15) avec un trou de passage d'arbre (15a) ;
la cavité est configurée pour recevoir le stator (S) en contact radial avec une surface intérieure de l'enveloppe ;
les surfaces internes des première et seconde parties d'enveloppe (10, 13) sont exemptes d'éléments limitant le déplacement du stator dans la direction axiale ;
la section de paroi cylindrique (11) de la première partie d'enveloppe (10) comprend, tous formés d'une seule pièce, au moins une portion de réception de boîte à bornes (11b), au moins deux portions de réception d'éléments de liaison (11c) et au moins deux éléments tubulaires (11d) formés d'un seul tenant dans la première partie d'enveloppe (10), chaque élément tubulaire (11d) présentant un canal fileté interne destiné à recevoir un élément de fixation (17) ;
la section de paroi cylindrique (14) de la seconde partie d'enveloppe (13) comprend, formés d'une seule pièce, au moins deux éléments d'accouplement (14c), chaque élément d'accouplement présentant un trou traversant central destiné à recevoir un élément de fixation (17) ; et
les éléments tubulaires (11d) et les éléments d'accouplement (14c) sont configurés pour coïncider lorsque les parties d'enveloppe sont accouplées, de sorte que chaque élément de fixation (17) respectif puisse être introduit dans le trou traversant central de chaque élément d'accouplement (14c) respectif et vissé dans le canal interne de chaque élément tubulaire (11d) respectif.

2. Enveloppe selon la revendication 1, **caractérisée en ce que** la limitation du déplacement du stator dans les directions radiale et axiale est réalisée par la pression radiale résultant de l'interférence entre les sections de paroi cylindriques (11, 14) des première et seconde parties d'enveloppe (10, 13) et le stator (S).

3. Enveloppe selon la revendication 1, **caractérisée en ce que** la limitation du déplacement du stator dans les directions radiale et axiale est réalisée par une tige élastique (21) qui passe à travers la paroi cylindrique (11) de la première partie d'enveloppe (10) et vient au contact du stator (S).

4. Enveloppe selon la revendication 1, **caractérisée en ce que** la limitation du déplacement du stator dans les directions radiale et axiale est réalisée soit par un élément adhésif entre la paroi cylindrique (11) de la première partie d'enveloppe (10) et le stator (S), soit par un élément adhésif entre la paroi cylindrique (14) de la seconde partie d'enveloppe (13) et le stator (S).

5. Enveloppe selon l'une quelconque des revendications 1 à 4, **caractérisée en ce que** le canal interne de l'élément tubulaire (11d) est hexagonal pour recevoir un élément de fixation (17) auto-taraudeur.

6. Enveloppe selon l'une quelconque des revendications 1 à 5, **caractérisée en ce que** la première partie d'enveloppe (10) comprend quatre portions de réception d'éléments de liaison (11c) et quatre éléments tubulaires (11d), et la seconde partie d'enveloppe (13) comprend quatre éléments d'accouplement (14c).

7. Enveloppe selon l'une quelconque des revendications 1 à 6, **caractérisée en ce que** la portion de réception de boîte à bornes (11b) comprend une paroi périmétrique (27) et une saillie de réception d'élément de fixation (28).

8. Enveloppe selon l'une quelconque des revendications 1 à 7, **caractérisée en ce que** la section d'extrémité (12) de la première partie d'enveloppe (10) comprend une portion de réception de bride (12b).
